Europäisches Patentamt

European Patent Office

Office européen des brevets

(11) Veröffentlichungsnummer: **0 316 569 B1**

## EUROPÄISCHE PATENTSCHRIFT

(45) Veröffentlichungstag der Patentschrift: **20.05.92**

(51) Int. Cl.5: **C02F 1/20**

(21) Anmeldenummer: **88116811.6**

(22) Anmeldetag: **11.10.88**

Die Akte enthält technische Angaben, die nach dem Eingang der Anmeldung eingereicht wurden und die nicht in dieser Patentschrift enthalten sind.

(54) **Verfahren zur katalytischen Reduktion von Sauerstoff in wässrigen Medien.**

(30) Priorität: **22.10.87 DE 3735758**

(43) Veröffentlichungstag der Anmeldung:
**24.05.89 Patentblatt 89/21**

(45) Bekanntmachung des Hinweises auf die
Patenterteilung:
**20.05.92 Patentblatt 92/21**

(84) Benannte Vertragsstaaten:
**BE CH DE FR GB IT LI LU NL SE**

(56) Entgegenhaltungen:
**EP-A- 0 145 262
DE-A- 1 201 262
DE-A- 1 642 494
US-A- 3 052 527**

**VGB KRAFTWERKSTECHNIK, Band 64, Nr. 1,
Januar 1984, Seiten 61-63; F. MARTINOLA et
al.: "Ein starkbasischer Anionenaustauscher
mit zwei Funktionen"**

**Hemming "Verfahrenstechnik", seiten
164-165. (1984)**

(73) Patentinhaber: **Degussa Aktiengesellschaft
Weissfrauenstrasse 9
W-6000 Frankturt am Main 1(DE)**

(72) Erfinder: **Behl, Walter
Womburgstrasse 27
W-8752 Mömbris(DE)**
Erfinder: **Deller, Klaus, Dr.
Friedhofstrasse 47
W-6452 Hainburg(DE)**
Erfinder: **Müller, Herbert, Dr.
Freigerichtstrasse 10
W-8757 Karlstein(DE)**

**Beschreibung**

Die Erfindung betrifft ein Verfahren zur Entfernung von Sauerstoff aus wäßrigen Medien, insbesondere aus Trinkwasser, mittels katalytischer Hydrierung an einem Metall der 8. Nebengruppe des periodischen Systems enthaltenden Katalysator.

In Wasser gelöster Sauerstoff verursacht bekanntlich Korrosion an metallischen Werkstoffen. Um die Zerstörung von Apparaten und Rohrleitungen zu verhindern, ergibt sich häufig die Notwendigkeit, Sauerstoff aus Prozeßwässern zu entfernen. Dies kann durch chemische Reduktion, z. B. mit Hydrazin oder heterogen-katalytisch mit Wasserstoff (Sonderdruck "Energieeinsparung durch katalytische Reduktion von Sauerstoff in Speisewasser" von F.B. Martinola und P. Thomas aus "Internationale Wasserkonferenz" Pittsburgh, Pensilvania (USA), 41. Jahrestagung, 20. - 22.10.1980, Bericht Nr. IWC -80-9) geschehen. Rein physikalisch läßt sich Sauerstoff aus Prozeßwässern auch durch Thermo-Vakuumentgasung entfernen.

Eine neuere Anwendung zur Sauerstoff-Entfernung aus wäßrigen Medien zeichnet sich bei der Trinkwasser-Aufbereitung ab. In den letzten Jahrzehnten ist der Nitratgehalt in Grund- und Oberflächengewässern durch intensive Düngung und Umweltbelastung so stark gestiegen, daß eine Denitrifizierung vielerorts zwingend notwendig wird. Dazu wendet man besonders dann, wenn größere Wassermengen anfallen, den biologischen Nitratabbau an. Dabei zeigt sich, daß sich die Nitrat-Abbaurate steigern läßt, wenn man den im Wasser gelösten Sauerstoff vorher entfernt.

Dies beruht darauf, daß die Mikroorganismen unter anaeroben Bedingungen dann bevorzugt den Nitratsauerstoff umsetzen. Als Methoden zur Sauerstoffentfernung wurden bisher in diesem Anwendungsfall die Vakuumentgasung und das Austreiben mit Stickstoff erprobt. Die dabei erzielten Ergebnisse waren jedoch nicht befriedigend. Daher besteht ein erhebliches Interesse an einem katalytisch arbeitenden Verfahren mit genügender Wirtschaftlichkeit.

In der DE-A 31 20 213 ist bereits ein Verfahren zur Durchführung katalytischer Reaktionen in wäßrigen Medien beschrieben gemäß dem man ein Katalysatorharz gleichzeitig als Katalysator und zur Adsorption der im wäßrigen Medium vorhandenen Ionen verwendet und die austauschaktiven Gruppen des Katalysatorharzes regeneriert, sobald diese erschöpft sind. Als Katalysatorharz können mit Metallen der 8. Nebengruppe des Periodensystems beladene Ionenaustauscher verwendet werden. Das dabei zur Anwendung gelangende Verfahrenskonzept bedarf einer relativ aufwendigen Anlage, bestehend aus einer Dosier- und Regelvorrichtung für den Wasserstoff, einer Mischstrecke zur Sättigung des Wassers mit Wasserstoff und eines Katalysatorbehälters, in dem das Katalysatorharz, z. B. ein mit Palladium beschichteter Lewatit-Ionenaustauscher, angeordnet ist. Der Wasserstoff wird unter Überdruck in den Katalysatorbehälter eindosiert, wobei er proportional zur durchgesetzten Flüssigkeitsmenge dosiert wird. Zum Einstellen der benötigten Konzentration an gelöstem Wasserstoff ist ein von Temperatur und Sauerstoffgehalt des Wassers abhängiger Wasserstoff-Mindestdruck erforderlich.

Mittels einer Mischstrecke mit Strömungsbrechern muß dafür gesorgt werden, daß sich die Wasserstoff-Gasblasen noch vor Erreichen des Katalysatorbettes auflösen. Das Katalysatorbett wird von mit Sauerstoff und Wasserstoff beladenem Wasser durchströmt. Die Menge an Katalysatorharz ist so bemessen, daß eine ausreichende Kontaktzeit gewährleistet ist. Ansammlungen von Gasblasen werden durch eine Behälterentlüftung vermieden. Rohrleitungen und Stutzen sind so auszuführen, daß eine Blasenbildung unterbleibt.

Das bekannte und nicht für Trinkwasser empfohlene Verfahren bedarf regelungstechnischer und apparativer Problemlösungen, um eine exakte stöchiometrische Wasserstoffmenge in Lösung zu bringen; dazu gehört die Druckanwendung. Dies bedeutet erhöhte Kosten für Apparatur, sicherheits- und regelungstechnische Einrichtungen.

Es wurde nun ein katalytisches Verfahren entwickelt, das den Sauerstoff aus wäßrigen Lösungen bereits bei Normaldruck oder erhöhtem Druck mittels eines speziell beaufschlagten Rieselbetts aus einem Trägerkatalysator entfernt.

Gegenstand der Erfindung ist ein Verfahren zur Entfernung von Sauerstoff aus wäßrigen Medien, insbesondere aus Trinkwasser, mittels katalytischer Hydrierung an einem Metall der 8. Nebengruppe des periodischen Systems enthaltenden Katalysator, wobei man das wäßrige Medium in einem mit Wasserstoff gefüllten Reaktionsraum auf ein darin angeordnetes Bett aus einem ein oder mehrere Platingruppenmetalle in reduzierter Form enthaltenden Trägerkatalysator gibt und durch das Bett rieseln oder strömen läßt und es dann aus der Wasserstoffatmosphäre austrägt.

Das Verfahren ist dadurch gekennzeichnet, daß das wäßrige Medium auf ein Katalysatorbett gesprüht wird, welches aus einer einheitlichen Katalysatorschicht oder aus zwei übereinander angeordneten Katalysatorschichten besteht, wobei diese hydrophobe und/oder hydrophile Oberflächeneigenschaften aufweisen, und den Wasserstoff mit dem wäßrigen Medium von oben nach unten im Gleichstrom durch den Reaktionsraum führt und ihn dann rezykliert.

Die US-A-3 052 527 und die DE-A-1 201 262 offenbaren zwar beide schon ein Verfahren zur Entfernung von Sauerstoff aus wäßrigen Medien mittels katalytischer Hydrierung an einem Metall der 8. Nebengruppe des periodischen Systems enthaltenden Katalysator, wobei man das wäßrige Medium in einem mit Wasserstoff gefüllten Reaktionsraum durch ein darin angeordnetes Bett aus einem ein- oder mehrere Platingruppenmetalle in reduzierter Form enthaltenden Trägerkatalysator in Schüttgutform rieseln oder strömen läßt und dann aus der Wasserstoffatmosphäre austrägt.

Hinzu kommt, daß das Verfahren gemäß DE-A-1 201 262 mit einer zusammenhängenden Flüssigphase arbeitet, wobei sich die Gasphase in Form von Bläschen in der flüssigen Phase bewegt, während beim erfindungsgemäßen Verfahren eine zusammenhängende Gasphase vorliegt, in der sich die flüssige Phase in Form eines Films oder von Flüssigkeitssträhnen bewegt. Die Bewegung von flüssiger und gasförmiger Phase ist bei den zum Vergleich stehenden Verfahren zwar gleichsinnig, die Strömungsrichtung jedoch verschieden: Während bei den bekannten Verfahren beide Phasen von unten nach oben durch den Katalysator strömen, strömen sie gemäß Erfindung von oben nach abwärts. Eine Differenzierbarkeit der Oberflächeneigenschaften des Katalysators ist bei den bekannten Verfahren nicht vorgesehen.

Schließlich ist in "Hemmring "Verfahrenstechnik", Vogel-Buchverlag Würzburg, Seiten 164 - 165, Bild 12.1 b)" schematisch eine Verfahrensführung für die Reaktion eines Gases mit einer Flüssigkeit gezeigt, die zwar insoweit mit der Erfindung korrespondiert, daß eine zusammenhängende Gasphase und eine in diese in Form feiner Tröpfchen eingebrachte Flüssigphase über eine in einem Rieselturm angeordnete Feststoffschüttung geleitet werden, sich aber von der Erfindung darin unterscheidet, daß sich Gas- und Flüssigphase gegensinnig bewegen, wobei das Gas im Rieselturm von unten nach oben strömt.

Nach einer besonders günstigen Ausführungsform der Erfindung besteht der Trägerkatalysator aus Platin und/oder Palladium auf Aktivkohle, alpha- oder gamma-Aluminiumoxid, Kieselsäure, Aluminiumsilikat oder mit diesen Metallen teilausgetauschtem Ionenaustauscher.

Der Edelmetallgehalt des Trägerkatalysators kann 0,01 - 10 Gew.% betragen; gute Ergebnisse werden bereits mit 0,1 - 5 Gew.% erzielt.

Bevorzugt weist der Trägerkatalysator eine BET-Oberfläche von 0,1 - 2000 $m^2/g$ auf.

Die erfindungsgemäße Verfahrensweise sieht vor, daß das Katalysatorbett aus einer einheitlichen Katalysatorschicht oder zwei übereinander angeordneten Katalysatorschichten besteht, wobei diese hydrophobe und/oder hydrophile Eigenschaften aufweisen.

An Katalysatorschichten mit hydrophilen Oberflächeneigenschaften kann bei geeigneter Wahl der Wasser-Durchsatzleistung die Ausbildung eines dünnen und gleichmäßigen Flüssigkeitsfilmes erreicht werden, so daß für die Umsetzung des gelösten Sauerstoffes aufgrund kurzer Diffusionswege besonders günstige Bedingungen vorherrschen.

Katalysatoren mit hydrophoben Oberflächeneigenschaften sind während des Betriebes nur teilweise benetzt, so daß sich der beim Eindüsen des Wassers ausgetriebene Sauerstoff an der freien Oberfläche des Katalysators direkt umsetzen kann, ohne vorher durch den Flüssigkeitsfilm diffundieren zu müssen. Darüber hinaus kann sich der Katalysator über die unbenetzte Oberfläche ständig mit Wasserstoff neu beladen.

Auf diese Weise ist eine Sättigung des wäßrigen Mediums mit Wasserstoff unter Druckanwendung, wie im Verfahren gemäß DE-A 31 20 213 beschrieben, nicht mehr erforderlich.

Das erfindungsgemäße Verfahren kann bei einem Wasserstoffdruck von 1 - 10 bar betrieben werden, normalerweise wird es bei Normaldruck oder geringem Überdruck (bis 5 bar) betrieben.

Besonders wenn neben Sauerstoff noch weitere Inertgase im wäßrigen Medium gelöst sind, die beim Eindüsen in die $H_2$-Atmosphäre entgasen, kann die Anwendung von geringem Überdruck von Vorteil sein, um die Anreicherung der Inertgase im Reaktionsraum während des Dauerbetriebes zu verhindern.

Die Durchsatzleistung der Flüssigphase ist durch den "Staupunkt" des Wassers im Katalysatorbett begrenzt. Sie wird gesteigert, indem man den Wasserstoff mit dem wäßrigen Medium im Gleichstrom von oben nach unten durch das Katalysatorbett führt und den Wasserstoff dann rezykliert.

Als Betriebstemperaturen kommen solche im Bereich von 0 - 100° C infrage, bevorzugt wird jedoch bei Umgebungstemperatur (in der Abhängigkeit von Sommer- und Winterbetrieb) gearbeitet. Die Verweilzeit des wäßrigen Mediums im Katalysatorbett kann 0,1 - 10 Minuten, bevorzugt 0,2 - 2 Minuten betragen.

Nach einer vorteilhaften Ausführungsform des erfindungsgemäßen Verfahrens wird das wäßrige Medium mittels einer ruhenden oder bewegten Verteilereinrichtung gleichmäßig über die Oberfläche des Katalysatorbetts verteilt. Als ruhende Verteiler können fest angeordnete Düsen oder Brausen dienen. Als bewegte Verteiler kommen z. B. rotierende Scheiben oder auf Dreharmen mit hohlen Achsen installierte Verteilervorrichtungen der angegebenen Art in Frage.

Durch die letztgenannte Ausführungsform wird eine periodische Beaufschlagung (ständiger Wechsel zwischen Last- und Ruhephase) der Katalysatorpartikel erreicht, so daß sich der Katalysator in der Ruhepause ständig neu mit Wasserstoff beladen kann. Wenn das wäßrige Medium neben dem Sauerstoff noch andere, gegenüber Wasserstoff inerte Gase gelöst enthält und die Reaktion bei relativ niedrigem Druck bis Normaldruck durchgeführt werden soll, kann man mit einem Teil des in den Reaktionsraum eingeführten oder rezyklierten Wasserstoffs das wäßrige Medium vor Einbringen in den Reaktionsraum vorentgasen.

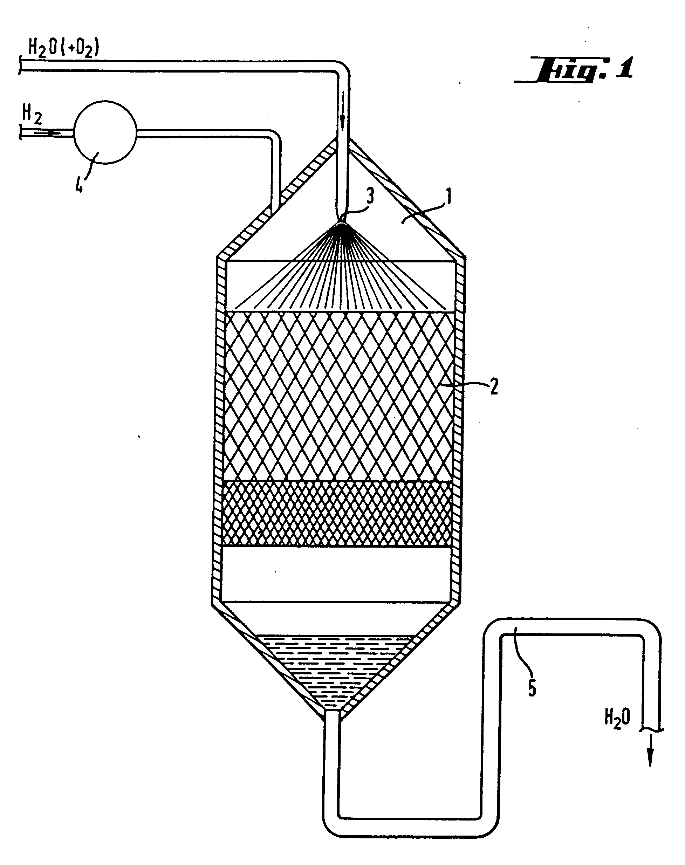

Die Erfindung wird nachfolgend anhand der Figuren 1 - 3 der Zeichnung mit Funktionsbeschreibung der gezeigten Ausführungsvarianten sowie durch Ausführungsbeispiele weiter erläutert.

Zur Durchführung des erfindungsgemäßen Verfahrens genügt eine Anlage, welche im wesentlichen aus dem Katalysatorbehälter und einigen regelungstechnischen Einrichtungen besteht.

In der in Figur 1 dargestellten, besonders einfachen und erprobten Ausführungsform wird das mit Sauerstoff beladene Wasser in feiner und gleichmäßiger Verteilung in eine im Reaktionsraum 1 vorgelegte Wasserstoffatmosphäre eingedüst, gelangt dadurch auf das Katalysatorbett 2 und rieselt als dünner Flüssigkeitsfilm über die Kontaktmasse, in der die Umsetzung von Sauerstoff mit Wasserstoff stattfindet.

Die Sprühdüse 3 ist so eingestellt, daß der gesamte Katalysatorbettquerschnitt gleichmäßig mit dem sauerstoffhaltigen Wasser beaufschlagt wird.

Das gesamte Reaktionsgefäß steht unter einer statischen Wasserstoffatmosphäre von Normaldruck. Der Wasserstoff stellt die kontinuierliche Phase, das Wasser die disperse Phase dar.

Bei dem hier beschriebenen Betrieb unter Normaldruck wird mit einem handelsüblichen Präzisions-Druckminderer 4 in der Wasserstoff-Zufuhrleitung ein geringer Überdruck von etwa 10 bis 50 mbar eingestellt und dieser Druck durch einen entsprechend hohen Überlauf 5 in der Wasserableitung des Systems aufrechterhalten.

Der Katalysator ist in zwei übereinanderliegenden Schichten angeordnet, wobei die obere Schicht z. B. aus mit Palladium belegtem Aktivkohlegranulat gröberen Korns, die untere Schicht z. B. aus mit Palladium belegtem $\gamma$-Aluminiumoxid-Granulat feineren Korns besteht.

Gegenüber den bekannten Verfahren, insbesondere dem Verfahren gemäß DE-A 31 20 213 ergeben sich vor allem mit der hier beschriebenen, einfachen Ausführungsform des Verfahrens einige wichtige Vorteile. Das erfindungsgemäße Verfahren arbeitet schon bei Normaldruck, da der Wasserstoff nicht erst in Wasser gelöst werden muß. Im Verfahren wird exakt der zur Reaktion benötigte Wasserstoff verbraucht; er wird direkt aus der Wasserstoff-Gasphase aufgenommen. Die erhältlichen Sauerstoff-Restkonzentrationen können bis < 0,1 mg Sauerstoff/l betragen. Entgasungsvorrichtungen, durch die etwa überschüssig gelöster Wasserstoff entweichen kann, entfallen, ebenfalls das regelungstechnische Problem, eine genau stöchiometrische Wasserstofflöslichkeit in Abhängigkeit von Sauerstoffgehalt, Temperatur und Volumenstrom des Wassers einzustellen.

Ebenso kann eine Mischstrecke entfallen, da eine Sättigung des Wassers mit Wasserstoff nicht erforderlich ist. Da der Katalysator stets in reduzierter Form eingesetzt wird, treten die mit den sog. Austauscherharzen besonders in der Anfangsphase feststellbaren Verluste an katalytisch aktiven Metallen nicht auf. Das erfindungsgemäße Verfahren ermöglicht schließlich hohe Rückgewinnungsquoten für das Edelmetall.

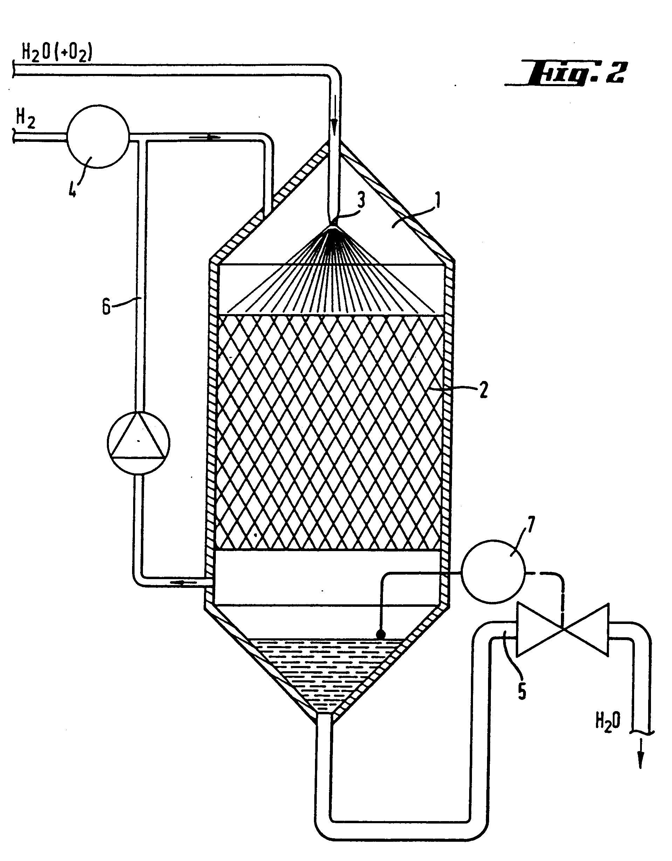

Die in Figur 2 dargestellte Verfahrensvariante arbeitet gegenüber der Ausführungsform gemäß Figur 1 mit einer zusätzlichen $H_2$-Kreislaufführung 6. Durch Fördern des Wasserstoffs im Gleichstrom mit dem wäßrigen Medium und anschließendes Rezyklieren kann die Wasserdurchsatzleistung gesteigert werden (Verschiebung des Staupunktes zu höheren Durchsätzen). Besonders dann, wenn niedrige $O_2$-Restgehalte erreicht werden sollen und/oder Inertgase im wäßrigen Medium enthalten sind, ist das Arbeiten bei erhöhtem Druck unter Verwendung einer handelsüblichen Füllstandsregelung 7 von Vorteil.

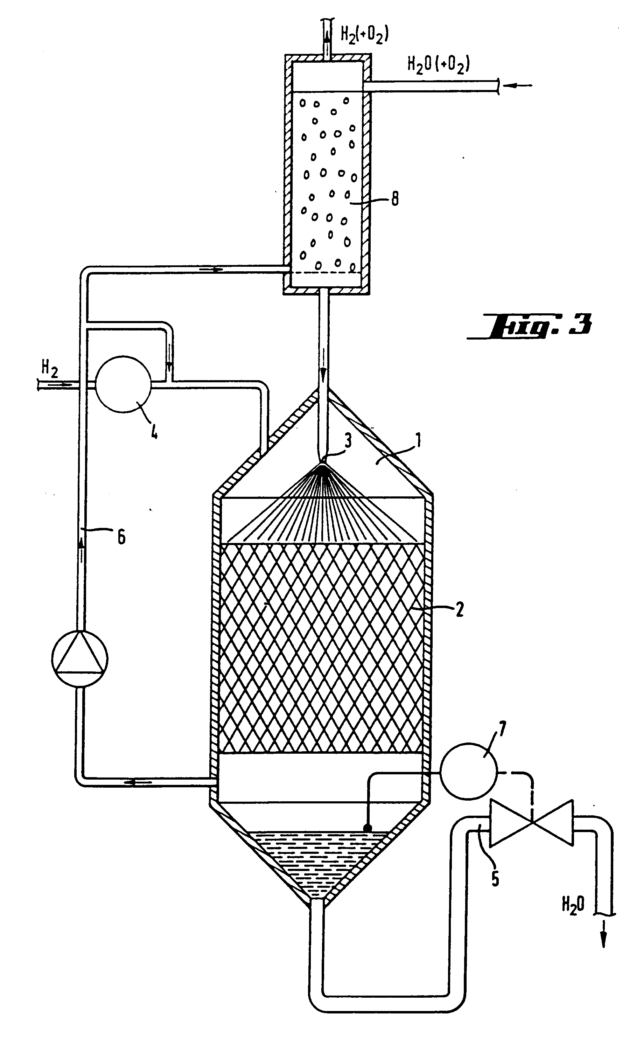

Eine gegenüber der in Figur 2 dargestellten Verfahrensvariante zusätzlich erweiterte Ausführungsform zeigt Figur 3. Dabei wird ein Teil des rezyklierten Wasserstoffs dazu verwendet, den im wäßrigen Medium gelösten Sauerstoff bereits vor Einbringen in den Reaktionsraum in einer vorgeschalteten Blasensäule 8 teilweise auszutreiben. Diese Verfahrensvariante kommt vor allem dann zur Anwendung, wenn bei Normaldruck gearbeitet wird und im wäßrigen Medium noch andere Inertgase gelöst sind, deren Anreicherung im Reaktionsraum zu verminderter $O_2$-Umsatzleistung führen kann.

Durch kontinuierliche bzw. diskontinuierliche Spülung des Reaktors mit Wasserstoff kann ein evtl. durch Inertgasanreicherung bedingter, störender Einfluß verhindert werden.

Die Erfindung wird nachfolgend anhand von Ausführungsbeispielen weiter erläutert.

Beispiel 1

1.1. Katalysatorherstellung

1180 g Aktivkohle (Strangpreßlinge ∅ 1,6 mm, Schüttgewicht 400 g/l, spezifische Oberfläche 1250 m$^2$/g) werden mit 650 ml einer Pd-haltigen Lösung imprägniert. Die Edelmetall-Lösung enthält im einzelnen 50 g einer 20 %igen $H_2PdCl_4$-Lösung, die mit 65 ml 10 %iger NaOH vorneutralisiert und mit destilliertem Wasser auf 650 ml verdünnt ist.

Nach der Trocknung bei 120° C wird der Katalysator in einer Lösung von 30 g Natriumformiat und 60 g festem Natriumhydroxid in 5 l destilliertem Wasser 15 h lang bei 80° C reduziert, dann mit destilliertem Wasser gewaschen und schließlich bei 120° C getrocknet. Der fertige Katalysator enthält 1 Gew.% Pd.

1.2. Katalytische Reduktion von in Wasser gelöstem Sauerstoff

Ein Rohrreaktor aus Glas (Innendurchmesser 15 cm) wird mit 1,5 l Katalysator gefüllt. Mit Hilfe einer Düse kann der Katalysator über den gesamten Bettquerschnitt gleichmäßig mit sauerstoffgesättigtem Wasser beaufschlagt werden. Der Reaktionsraum ist dabei mit reinem Wasserstoff gefüllt. Bei konstantem Wasserdurchsatz (LHSV = 120 h$^{-1}$) werden $H_2$-Druck und Zulauftemperatur des Wassers variiert und dessen $O_2$-Beladung vor und hinter dem Katalysatorbett gemessen.

(Versuchsbedingungen und Ergebnisse siehe Tab. 1)

Beispiel 2

2.1 Katalysatorherstellung

1200 g γ-Aluminiumoxid-Träger (Strangpreßlinge ∅ 1,6 mm, Schüttgewicht 650 g/l, spezifische Oberfläche 220 m$^2$/g) werden mit 720 ml einer Pd-haltigen Lösung imprägniert. Die Edelmetall-Lösung enthält im einzelnen 30 g einer 20 %igen $H_2PdCl_4$-Lösung, die mit 39 ml 10 %iger NaOH vorneutralisiert und mit destilliertem Wasser auf 720 ml verdünnt ist.

Nach der Trocknung bei 120° C wird der Katalysator in einer Lösung von 18 g Natriumformiat und 36 g festem Natriumhydroxid in 4,2 l destilliertem Wasser 15 h lang bei 80° C reduziert, dann mit destilliertem Wasser gewaschen und schließlich bei 120° C getrocknet. Der fertige Katalysator enthält 0,5 Gew.% Pd.

2.2. Katalysatortestung - analog Beispiel 1.2., jedoch bei unterschiedlichen Wasserdurchsätzen, konstantem Druck und nahezu gleicher Temperatur.

(Versuchsbedingungen und Ergebnisse siehe Tab. 1)

Beispiel 3

3.1. Katalysatorherstellung

1040 g Aktivkohle (Strangpreßlinge ∅ 2,4 mm, Schüttgewicht 390 g/l, spezifische Oberfläche 1250 m$^2$/g) werden mit 940 ml einer Pd-haltigen Lösung imprägniert. Die Edelmetall-Lösung enthält im einzelnen 250 g einer 20 %igen $H_2PdCl_4$-Lösung, die mit 325 ml 10 %iger NaOH vorneutralisiert und mit destilliertem Wasser auf 940 ml verdünnt ist.

Nach der Trocknung bei 120° C wird der Katalysator in einer Lösung von 150 g Natriumformiat und 150 g festem Natriumhydroxid in 5 l destilliertem Wasser 15 h lang bei 80° C reduziert, dann mit destilliertem Wasser gewaschen und schließlich bei 120° C getrocknet. Der fertige Katalysator enthält 5 Gew.% Pd.

3.2. Katalysatortestung - analog Beispiel 1.2., jedoch unter konstanten Versuchsbedingungen.

(Versuchsbedingungen und Ergebnisse siehe Tab. 1)

Beispiel 4

4.1. Katalysatorherstellung - unter Verwendung des Aktivkohle-Trägers von Beispiel 3 auf an sich bekannte Weise nach Beispiel 3.1., jedoch enthält die Imprägnierlösung (940 ml) 5 g 20 %ige $H_2PdCl_4$-Lösung und ist mit 7 ml 10 %iger NaOH vorneutralisiert. Die Reduktion wird in einer Lösung von 3 g Natriumformiat und 6 g festem Natriumhydroxid in 5 l destilliertem Wasser durchgeführt. Der fertige Katalysator hat einen Pd-Gehalt von 0,1 Gew.%.

4.2. Katalysatortestung - analog Beispiel 1.2., jedoch unter konstanten Versuchsbedingungen. (Versuchsbedingungen und Ergebnis siehe Tab. 1)

Beispiel 5

5.1. Katalysatorherstellung - unter Verwendung des Aktivkohle-Trägers von Beispiel 3 auf an sich bekannte Weise nach Beispiel 3.1., jedoch enthält die Imprägnierlösung (940 ml) 25 g 20 %ige $H_2PdCl_4$-Lösung 20 g 25 %ige $H_2PtCl_6$-Lösung und 55 ml 10 %ige NaOH.

Zur Reduktion des Katalysators dient eine Lösung von 30 g Natriumformiat und 60 g festem Natriumhydroxid in 5 l destilliertem Wasser. Der fertige Katalysator enthält 0,5 Gew.% Pd und 0,5 Gew.% Pt.

5.2. Katalysatortestung - analog Beispiel 1.2., jedoch unter konstanten Versuchsbedingungen. (Versuchsbedingungen und Ergebnis siehe Tab. 1)

Beispiel 6

6.1. Katalysatorherstellung - unter Verwendung des Aktivkohle-Trägers von Beispiel 3 auf an sich bekannte Weise nach Beispiel 3.1., jedoch besteht die Imprägnierlösung aus 20 g einer 25 %igen $H_2PtCl_6$-Lösung, die mit destilliertem Wasser auf 940 ml verdünnt ist.

Zur Reduktion wird eine Lösung von 15 g Natriumformiat und 30 g festem Natriumhydroxid in 5 l destilliertem Wasser verwendet. Der fertige Katalysator enthält 0,5 Gew.% Pt.

6.2. Katalysatortestung - analog Beispiel 1.2., jedoch unter konstanten Versuchsbedingungen. (Versuchsbedingungen und Ergebnis siehe Tab. 1)

Beispiel 7

7.1. Katalysatorherstellung

910 g Aktivkohle (Strangpreßlinge ⌀ 3,0 mm, Schüttgewicht 350 g/l, spezifische Oberfläche 1250 $m^2$/g) werden mit einer Suspension von 200 g Teflonpulver (30 $\mu$m) in 420 ml destilliertem Wasser imprägniert, dann in einer rotierenden Trommel bei 120° C 1,5 h lang getrocknet und anschließend bei 320° C ca. 2 h lang getempert.

Danach erfolgt eine weitere Imprägnierung der mit Teflon beschichteten Aktivkohle mit 25 g einer 20 %igen $H_2PdCl_4$-Lösung, die mit Methanol auf 420 ml verdünnt ist. Schließlich wird der Katalysator bei 80° C unter Vakuum bis zur Gewichtskonstanz getrocknet. Der fertige Katalysator enthält 0,5 Gew.% Pd und besitzt hydrophobe Oberflächeneigenschaften.

7.2. Katalysatortestung - analog Beispiel 1.2., jedoch unter konstanten Versuchsbedingungen. (Versuchsbedingungen und Ergebnis siehe Tab. 1)

Beispiel 8

8.1. Katalysatorherstellung

1000 g (Trockengewicht) Kationenaustauscher (Kugeln ⌀ 0,3 - 1,3 mm) werden in 4 l destilliertem Wasser suspendiert und bei 40° C mit einer Lösung versetzt, die 25 g einer 20 %igen $H_2PdCl_4$-Lösung enthält und mit destilliertem Wasser auf 500 ml verdünnt ist. Nach 15 min. Rühren bei 40° C erfolgt die Reduktion durch langsame Zugabe von 100 ml einer 2 %igen Natriumborhydrid-Lösung. Nach weiteren 15 min. Rühren bei 40° C wird der Katalysator abfiltriert und mit destilliertem Wasser auf der Nutsche gewaschen. Der fertige Katalysator enthält 0,5 Gew.% Pd.

8.2. Katalysatortestung - analog Beispiel 1.2., jedoch bei konstanten Versuchsbedingungen und unter Anwendung der bereits beschriebenen Verfahrensvarianten, wobei

a) zur Vermeidung des Flüssigkeitsstaus aufgrund der geringen Katalysator-Partikelgröße der Wasserstoff im Gleichstrom mit dem Wasser durch das Katalysatorbett gefördert und dann wieder rezykliert wird. Der Wasserstoff-Kreislaufstrom beträgt dabei ca. 5 l/min.

b) ein Teil des rezyklierten Wasserstoffstroms (1 l/min) zur Vorentgasung des Wassers, das neben Sauerstoff auch gelösten Stickstoff enthält, vor Einbringen in den Reaktionsraum verwendet wird.

Beispiel 9

9.1. Katalysatorherstellung - analog Beispiel 2.1. und 7.1.

9.2. Katalysatortestung - analog Beispiel 1.2., jedoch bei konstanten Versuchsbedingungen und unter Verwendung von je 0,75 l o.g. Katalysatoren in Anordnung zweier übereinanderliegender Schichten, derart, daß der Katalysator mit den hydrophoben Oberflächeneigenschaften (siehe Beispiel 7.1.) die obere, der Katalysator mit den hydrophilen Eigenschaften (siehe Beispiel 2.1.) die untere Schicht bildet. (Versuchseinstellungen und Ergebnis siehe Tab. 1)

Tab. 1: Katalytische Reduktion von in Wasser gelöstem Sauerstoff Versuchsbedingungen und Ergebnisse

| Beispiel | Katalysator | LHSV (h⁻¹) | Druck (mbar) | Temp. (°C) | O₂-Restgehalt (mg O₂/l) |
|---|---|---|---|---|---|
| 1 | 1 % Pd/Aktivkohle | 120 | 20 | 8 | 0.18 |
| | | 120 | 20 | 20 | 0.14 |
| | | 120 | 20 | 60 | 0.03 |
| | | 120 | 5000 | 17 | 0.015 |
| 2 | 0,5 % Pd/ γ-Al₂O₃ | 43 | 20 | 17 | 0.03 |
| | | 360 | 20 | 16 | 0.39 |
| 3 | 5 % Pd/Aktivkohle | 120 | 20 | 14 | 0.05 |
| 4 | 0,1 % Pd/Aktivkohle | 120 | 20 | 16 | 0.32 |
| 5 | 0,5 % Pd 0,5 % Pt/ Aktivkohle | 120 | 20 | 19 | 0.21 |
| 6 | 0,5 % Pt/Aktivkohle | 60 | 20 | 15 | 0.47 |
| 7 | 0,5 % Pd/Aktivkohle (hydrophobiert) | 120 | 20 | 15 | 1.0 |
| 8 a) | 0,5 % Pd/Ionenaustauscher | 120 | 20 | 15 | 0.33 |
| b) | " | 120 | 20 | 15 | 0.19 |
| 9 | 0,5 % Pd/Aktivkohle (hydrophobiert) und 0,5 % Pd/ γ-Al₂O₃ | 120 | 20 | 19 | 0.17 |

**Patentansprüche**

1. Verfahren zur Entfernung von Sauerstoff aus wäßrigen Medien, insbesondere aus Trinkwasser, mittels katalytischer Hydrierung an einem Metall der 8. Nebengruppe des periodischen Systems enthaltenden Katalysator, wobei man das wäßrige Medium in einem mit Wasserstoff gefüllten Reaktionsraum auf ein darin angeordnetes Bett aus einem ein oder mehrere Platingruppenmetalle in reduzierter Form enthaltenden Trägerkatalysator gibt und durch das Bett rieseln oder strömen läßt und es dann aus der Wasserstoffatmosphäre austrägt,
**dadurch gekennzeichnet,**
daß das wäßrige Medium auf ein Katalysatorbett gesprüht wird, welches aus einer einheitlichen Katalysatorschicht oder aus zwei übereinander angeordneten Katalysatorschichten besteht, wobei diese hydrophobe und/oder hydrophile Oberflächeneigenschaften aufweisen, und den Wasserstoff mit dem wäßrigen Medium von oben nach unten im Gleichstrom durch den Reaktionsraum führt und ihn dann rezykliert.

**Claims**

1. A process for removing oxygen from aqueous media, particularly drinking water, by catalytic hydrogenation on a catalyst containing a metal of the 8th secondary group of the periodic system, the aqueous medium being introduced into a hydrogen-filled reaction chamber containing a bed of a supported catalyst containing one or more platinum group metals in reduced form and being allowed to trickle or flow through the bed and then being discharged from the hydrogen atmosphere,
characterized in that the aqueous medium is sprayed onto a catalyst bed consisting of a uniform catalyst layer or of two vertically adjacent catalyst layers, the catalyst layers having hydrophobic and/or hydrophilic surface properties, and the hydrogen is passed downwards through the reaction chamber in co-current with the aqueous medium and is then recycled.

**Revendications**

1. Procédé d'élimination de l'oxygène dans des milieux aqueux, notamment l'eau potable, par hydrogénation catalytique sur un catalyseur comprenant un métal du 8ème sous groupe du tableau périodique, dans lequel on introduit le milieu aqueux dans une chambre réactionnelle remplie d'hydrogène sur un lit qui y est disposé constitué d'un catalyseur supporté comportant sous forme réduite un ou plusieurs métaux du groupe du platine et on le fait ruisseler ou écouler à travers le lit et ensuite on le soutire de l'atmosphère d'hydrogène, procédé caractérisé en ce que le milieu aqueux est pulvérisé sur un lit de catalyseur, qui est constitué d'une couche unitaire de catalyseur ou de deux couches de catalyseur superposées, celles-ci ayant des propriétés superficielles hydrophobes et/ou hydrophiles, et on introduit l'hydrogène avec le milieu aqueux de haut en bas dans l'écoulement de même sens et ensuite on le recycle.

Fig. 1

Fig. 2

Fig. 3